# FASCICULE DE BREVET EUROPEEN

(11) **EP 1 598 292 B1**
(45) Date de publication et mention de la délivrance du brevet: **23.04.2008**
(21) Numéro de dépôt: 05300365.3
(22) Date de dépôt: 10.05.2005
(51) Int. Cl.: B65G 39/00, B65G 13/02

(54) **Installation de refroidissement d'un rouleau entraîné par moteur**
Kühlanlage für eine motorisch betriebene Rolle
Cooling installation for a motor driven roller

(30) Priorité: 18.05.2004 FR 0450984
(43) Date de publication de la demande: 23.11.2005
(73) Titulaire: DAVID, 42000 SAINT-ETIENNE (FR)
(72) Inventeur: DAVID, Patrick, 42000, SAINT-ETIENNE (FR); ROCHER, Pascal, 42100, SAINT-ETIENNE (FR); BOULEY, Jean-Philippe, 71260, CHARBONNIERES (FR)
(74) Mandataire: Dupuis, François

(56) Documents cités:
- DE-A- 3 230 731
- DE-U- 20 319 969
- US-A- 5 413 209

## Description

L'invention se rattache au secteur technique des installations de convoyage de charge par rouleaux de manutention, convoyeurs de charge isolée, convoyeur à bander selon le préambule de la revendication 1.

Le demandeur a largement développé dans le cadre de ses activités des systèmes et installations du type convoyeur de charges isolées, convoyeurs à bandes, incluant des rouleaux de manutention récepteurs de charge, containers et autres devant être translatés d'un point à un autre. Pour assurer ce transfert, un ou plusieurs rouleaux sont moteurs en étant disposés préalablement et de manière connue selon un pas préétabli pour assurer, selon la distance de convoyage et le poids de la charge, le transfert progressif de la charge, sans arrêt inopiné ou blocage. Les rouleaux moteurs et tambours moteurs ainsi existants ont normalement une tendance à l'échauffement de par leur fonctionnement, et il est nécessaire d'évacuer les calories dégagées par le moteur ou ensemble moteur-réducteur en fonction des conditions d'avance. L'évacuation desdites calories s'effectue par la surface du tube qui les entoure et intégrant ainsi le groupe moteur - moteur réducteur. En pratique, la température constatée est élevée de l'ordre de 100° C en fonctionnement normal, ce qui empêche tout contact manuel du rouleau pour quelque raison que ce soit.

Pour améliorer l'échange thermique, on utilise des huiles particulières à haut pouvoir calorifique, ou de simples huiles de lubrification qui sont aptes à capter le plus rapidement possible les calories issues de l'échauffement du moteur, moteur-réducteur et les retransmettre au tube extérieur. Ce dernier par convection thermique évacue les calories soit à l'air libre, soit au contact d'une bande transporteuse ou autres systèmes et moyens en contact avec la surface extérieure du tube.

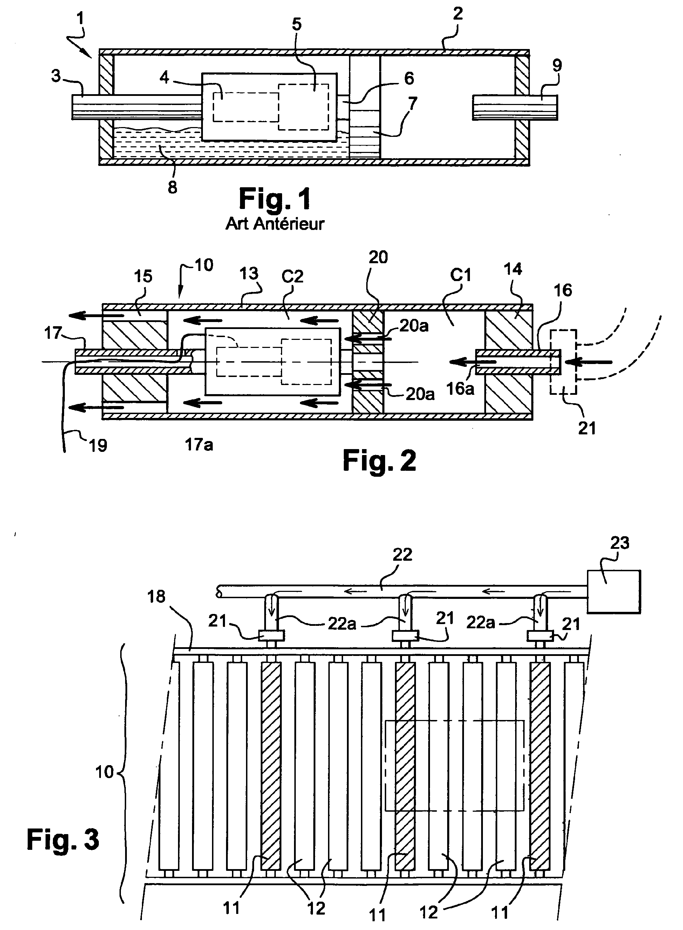

On a ainsi représenté figure 1 au titre de l'art antérieur un rouleau moteur pris dans son ensemble par (1) avec un tube extérieur (2) monté à ses extrémités sur des axes de rotation (3). Le rouleau est fermé et inclut intérieurement un ensemble moteur (4) et réducteur (5) monté par rapport aux axes (3) et (6), ce dernier étant solidaire d'une paroi (7) intermédiaire formant accouplement faisant tourner le tube. Le fluide (8) sous forme d'huile recueille lesdites calories et les transfère au tube qui les évacue vers l'extérieur.

Ce type d'installation présente de nombreux inconvénients. L'utilisation de l'huile de lubrification, quel que soit son pouvoir calorifique, n'est pas de nature à diminuer la température extérieure du tube récepteur, et cela constitue une gêne en cas d'intervention sur l'installation pour des raisons diverses.
- L'utilisation de l'huile exige une maintenance, des contrôles, des opérations régulières de vidange et une surveillance de l'installation afin de limiter et / ou d'éviter le risque de fuites.
- Un autre problème réside dans le fait du recyclage des huiles usagées et leur évacuation, avec des coûts supplémentaires.
- Un autre problème réside aussi dans le temps d'intervention et de montage pour procéder aux différentes opérations précitées.
- En outre, de par l'utilisation de l'huile, les contraintes de fabrication sont réelles, et pour répondre aux exigences d'étanchéité et conserver l'huile à l'intérieur du tube.
- Un autre problème réside dans le choix et l'identification des huiles ayant une capacité diélectrique pour tenir compte du fait que le groupe moteur électrique se trouve dans le bain d'huile.

A la connaissance du demandeur, cette pratique est poursuivie par les nombreux fabricants actuellement sur le marché, à défaut d'avoir trouvé une solution au problème posé.

Ainsi, les recherches faites par les fabricants ont été toujours dans le même sens en relation avec la transmission des calories vers le tube, par des qualités de fluides de lubrification toujours plus performants.

Malgré tout ce travail de recherche effectué par des voies diverses, il n'a pas été trouvé de réelle solution apte à permettre un contrôle et une stabilisation de la température du tube et donc du fluide et de l'ensemble moteur-réducteur.

Le brevet DE-A-3230731 décrit une installation incluant une soufflerie électrique avec une distribution d'une grande quantité d'air pour refroidir le groupe moteur. DE-A-3230731 décrit le préambule de la revendication 1.

La démarche du demandeur qui a une large expérience des systèmes de convoyage a été d'analyser et de rechercher une autre solution allant aux antipodes de la pratique actuelle, et en posant la question du refroidissement du tube de manière différente.

Ainsi et selon l'invention, le demandeur a considéré qu'il y avait lieu de manière nouvelle de s'exonérer de la présence d'huiles de lubrification et donc des moyens de transfert des calories, par un autre procédé consistant alors à évacuer au fur et à mesure les calories générées par le groupe moteur - moteur réducteur.

Ainsi selon l'invention, le demandeur a développé un concept et une installation de refroidissement d'un organe moteur pour convoyage de charges par rouleaux de manutention, qui est simple à mettre en oeuvre, peu coûteux, et qui en fonctionnement selon les tests effectués permet d'avoir une température extérieure de contact des tubes incorporant les moyens moteurs à un niveau tout à fait acceptable au toucher et non dissuasif.

L'invention a pour objet une installation de refroidissement d'organes moteurs, conforme à la revendication 1.

Pour fixer l'objet de l'invention illustrée d'une manière non limitative aux figures des dessins où :
- la figure 1 est une vue en coupe à caractère schématique d'un dispositif de refroidissement par huile d'un organe moteur pour rouleaux de manutention selon l'art antérieur.
- la figure 2 est une vue en coupe à caractère schématique du dispositif selon l'invention.
- la figure 3 est une vue à caractère schématique d'une installation de convoyage par exemple de charge isolée mettant en oeuvre le dispositif de refroidissement selon l'invention.

Afin de rendre plus concret l'objet de l'invention, on le décrit maintenant d'une manière non limitative illustrée aux figures des dessins.

L'installation de convoyage par rouleaux de manutention de charges est référencé dans son ensemble par (10). On entend par charge (C) tous produits, containers de quelque forme que ce soit devant être transportés par le convoyeur d'un endroit à un autre, ce convoyeur pouvant être à charge isolée ou à bande.

Pour la compréhension de l'invention, on fait référence à titre d'exemple à une utilisation pour le convoyage de charge isolée.

Pour assurer le transport de charges, la ligne de convoyage comprend plusieurs rouleaux ou tambours moteurs (11) régulièrement espacés à des pas préétablis pour assurer ledit transfert et des rouleaux (12) libres en rotation. Dans la suite de la description, on utilisera le terme général rouleaux moteur en considérant que son agencement intérieur avec les éléments moteurs lui permet de recevoir un ensemble moteur réducteur, mais aussi une cartouche incluant ledit ensemble moteur réducteur.

Selon l'installation, le rouleau moteur (11) comprend un tube (13) qui à ses extrémités opposées reçoit des paliers (14-15) montés sur des axes (16-17) fixes qui sont positionnés sur la structure formant châssis (18) de la ligne de convoyage. Ces axes (16-17) sont creux intérieurement avec un ou plusieurs alésages (16a-17a), le premier (16a) formant entrée et définissant un sens de distribution et de circulation d'un fluide (F), et l'autre (17a) assurant le passage de moyens (19) de câblerie électrique. Le palier (15) est aménagé avec des conduits traversant (15a) formant évents, et permettant d'évacuer le fluide à l'extérieur.

Intérieurement, l'ensemble moteur-réducteur et la cartouche recevant l'ensemble moteur (4) - réducteur (5) est monté sur un axe (24) fixe solidaire d'un accouplement (20) monté intérieurement audit tube (13) et par l'axe (17) monté en bout sur l'un des paliers (15). Cet accouplement (20) bien connu en lui-même présente dans son épaisseur transversale un ou des conduits (20a) de passage de fluide. La construction du rouleau motorisé comprend ainsi deux chambres (C1-C2), l'une en amont (C1) appelée chambre de détente, et l'autre (C2) en aval appelée chambre de refroidissement dans laquelle se trouve l'ensemble moteur-réducteur.

Sur l'axe fixe (16a), est disposé un embout (21) de prise d'air qui permet la fixation d'un circuit de distribution d'air (22) et en particulier d'air comprimé. La sortie d'air par les évents (15a) est libre. En variante, cette sortie d'air peut être contrôlée, filtrée par tous moyens intégrés dans le rouleau et permettant de tenir compte de toutes les contraintes relatives aux applications de l'invention.

Selon l'installation, l'ensemble des rouleaux motorisés est monté en parallèle sur une ligne de distribution (22) d'air comprimé sous pression avec des dérivations (22a) de connexion aux embouts (21), ladite ligne présentant en amont un compresseur d'air (23).

Le refroidissement de chaque rouleau motorisé s'effectue par air dans une fonction nouvelle d'évacuation à l'air libre des calories générées par le fonctionnement du groupe moteur. A l'entrée de chaque rouleau moteur par la prise d'air (21), ledit air est projeté dans la chambre de détente (C1) par le biais du conduit formé par l'axe (16) monté dans le palier (14), puis traverse par un ou plusieurs conduits (20a) l'accouplement (20) pour arriver dans la chambre de refroidissement (C2) où se trouve la cartouche du groupe moteur-réducteur, ou le moteur-réducteur. L'air soufflé puis chauffé par l'apport calorifique généré est évacué naturellement et automatiquement par le ou les évents ou autres moyens formés sur le palier de sortie de par l'effet de poussée à l'entrée du rouleau moteur puis l'injection d'air comprimé. On obtient ainsi une distribution d'air continue toujours renouvelée et non stockée, ce qui évidemment limite l'élévation de température.

Une très faible pression est nécessaire et un débit approprié suffit à propulser à l'extérieur l'air du tube chauffé par les calories et lesdites calories dégagées par le moteur-réducteur.

Ainsi, d'après les tests effectués et avec un moteur de 240 W, on a procédé aux mesures suivantes :
- Fonctionnement sans le dispositif de refroidissement de l'invention T° C intérieure 100 à 140° C.
- Durée de fonctionnement 90 minutes avec un moteur en marche continue.
- Avec le dispositif de refroidissement de l'invention, T° C intérieure du tube de l'ordre de 30 à 50°, et une durée de fonctionnement illimitée du moteur, car la température atteinte n'est pas préjudiciable au fonctionnement dudit moteur.

Ainsi de manière tout à fait inattendue, le nouveau procédé de refroidissement des rouleaux moteurs apporte de nombreux avantages.

Tout d'abord, on peut accéder à un fonctionnement continu sans aucune gêne de marche et sans danger pour les utilisateurs, car la température de contact des tubes des rouleaux moteurs de l'ordre de 30 à 50° C n'est pas source de brûlure et de blessure.

Le rouleau motorisé et son tube se trouvent dans ces conditions à une pression supérieur à celle de l'extérieur. Il n'y a aucun risque d'intrusion de corps étrangers, car par l'effet de ventilation continue dans le même sens et du souffle d'air constaté en sortie du rouleau moteur, lesdits corps ou particules (poussières par exemple) ne peuvent pénétrer dans le rouleau moteur. Si par inadvertance et dans ce cas, pendant l'arrêt de fonctionnement du rouleau moteur des particules quelconques venaient à pénétrer par les orifices de sortie d'air, elles seraient lors du fonctionnement immédiatement évacuées par l'effet de soufflerie.

Un autre avantage réside dans le fait que c'est l'ensemble du tube rouleau moteur qui est balayé et ventilé par l'air projeté, de sorte que l'échauffement en température est parfaitement maîtrisé.

Un autre avantage important réside dans la simplicité de l'installation et sa quasi absence de maintenance lourde. Il n'y a plus de vidange, de stockage d'huile et tous les inconvénients liés à ce fluide.

Un autre avantage réside en ce que le raccordement de la chaîne de convoyage au circuit de distribution d'air est aisé, et ne pose aucun problème particulier, car nombre d'entreprises dans lesquelles les lignes de convoyage sont installées ont déjà un circuit et installation de distribution d'air.

En pratique, la solution apportée par l'invention est particulièrement performante et génère des coûts de montage et de maintenance beaucoup plus réduits que la solution utilisée selon l'art antérieur.

## Revendications

1. Installation de refroidissement d'organes moteurs pour convoyage de charge par rouleaux de manutention, avec un ou des rouleaux moteurs et un ou des rouleaux libres, l'organe moteur étant refroidi par air le ou les rouleaux moteurs (11) étant agencés intérieurement pour autoriser le passage et la circulation traversante d'un fluide sous pression chargé de prélever et d'évacuer vers l'extérieur les calories issues du fonctionnement du groupe moteur-réducteur (4-5) de chaque rouleau moteur, en entrée chaque rouleau moteur recevant une prise de branchement (21) autorisant à partir d'une ligne de distribution (22) du fluide comprimé la distribution dudit fluide, en autorisant le contrôle de l'échauffement dudit groupe moteur,
les différents rouleaux moteurs de la ligne de convoyage étant alimentés en batterie et en parallèle par une source d'air comprimé en provenance d'un compresseur d'air, **caractérisée en ce que**
chaque rouleau moteur (11) comprend un tube (13) agencé avec deux chambres (C1 - C2), l'une en amont de détente et l'autre en aval (C2) de refroidissement dans laquelle se trouve l'ensemble moteur.

2. Installation selon la revendication 1, **caractérisée en ce que** chaque rouleau moteur (11) comprend un tube (13) recevant à ses extrémités opposées des paliers (14-15) montés sur des axes de rotation (16-17) positionnés sur la structure formant châssis (18) de la ligne de convoyage, l'ensemble moteur (4) - réducteur (5) étant disposé dans ledit tube en appui sur l'un des paliers (14) et sur un accouplement (20) monté intérieurement audit tube et inséré dans une partie intermédiaire et définissant deux chambres (C1-C2), l'une en amont (C1) de détente, et l'autre en aval (C2) de refroidissement dans laquelle se trouve l'ensemble moteur-réducteur, et **en ce que** le rouleau motorisé est agencé dans sa structure avec des conduits autorisant la circulation de fluide comprimé à partir d'un embout de prise (21) de fluide disposé à partir d'un axe fixe (16) du rouleau.

3. Installation selon la revendication 2, **caractérisée en ce que** les paliers (14-15) sont montés sur des axes (16-17) fixes, creux intérieurement avec un ou plusieurs alésages (16a-17a), le premier (16a) formant entrée à partir duquel est accouplé l'embout de prise de fluide (21), et l'autre (17a) assurant le passage de moyens (19) de câblerie électrique, et **en ce que** le palier (15) est aménagé avec des conduits traversant formant évents, et **en ce que** l'accouplement (20) présente dans son épaisseur transversale un ou des conduits (20a) de passage de fluide.

## Claims

1. Installation for cooling drive members for conveying loads by handling rollers, with one or more drive rollers and one or more idle rollers, the drive member being cooled by air,
the drive roller or rollers (11) being arranged internally for allowing the passage and the crosswise circulation of a pressurized fluid responsible for taking up and removing to the exterior the heat generated by the operation of the geared motor unit (4-5) of each drive roller, each drive roller receiving at the inlet a fluid intake nipple (21) for distributing a compressed fluid from a distribution line (22) of the said fluid, allowing the control of the temperature rise of the said drive unit,
the various drive rollers of the conveyor line being powered by battery and in parallel by a source of compressed air from an air compressor, **characterized in that**
each drive roller (11) comprises a tube (13) arranged with two chambers (C1-C2), one upstream for expansion and the other downstream (C2) for cooling in which the drive unit is placed.

2. Installation according to Claim 1, **characterized in that** each drive roller (11) comprises a tube (13) accommodating at its opposite ends bearings (14-15) mounted on fulcrum pins (16-17) positioned on the frame forming structure (18) of the conveyor line, the motor (4)-reducer(5) unit being placed in the said tube against one of the bearings (14) and against a coupling (20) mounted internally with the said tube and inserted into an intermediate part and defining two chambers (C1-C2), one upstream (C1) for expansion, and the other downstream (C2) for cooling, in which the geared motor unit is located, and **in that** the motorized roller is arranged in its structure with lines for circulating compressed fluid from a fluid intake nipple (21) positioned from a fixed axle (16) of the roller.

3. Installation according to Claim 2, **characterized in that** the bearings (14-15) are mounted on fixed axles (16-17), internally hollow, with one or more bores (16a-17a), the first (16a) forming an inlet to which the fluid intake nipple (21) is coupled, and the other (17a) allowing the passage of electric wiring means (19), and **in that** the bearing (15) is arranged with penetrating lines forming vents, and **in that** the coupling (20) has one or more fluid passage ducts (20a) in its crosswise thickness.

## Patentansprüche

1. Kühlanlage mit Motorelementen für den Transport von Lasten mittels Förderrollen, mit einer motorisch betriebenen Rolle oder motorisch betriebenen Rollen und einer oder mehreren freien Rollen, wobei das Motorelement mit Luft gekühlt wird und die motorisch betriebene Rolle oder die motorisch betriebenen Rollen (11) im Innern angeordnet sind, um den Durchgang und die Zirkulation einer unter Druck stehenden Flüssigkeit zu ermöglichen, die die Wärmeeinheiten, die aus dem Betrieb des Getriebemotor-Aggregates (4-5) jeder motorisch betriebenen Rolle stammen, nach außen abziehen soll, wobei jede motorisch betriebene Rolle am Eingang einen Anschluss (21) erhält, der über eine Verteilungsleitung (22) der komprimierten Flüssigkeit die Verteilung der Flüssigkeit ermöglicht, indem die Kontrolle der Erwärmung des Motoraggregates möglich wird, wobei die verschiedenen motorisch betriebenen Rollen des Transportbandes durch eine Batterie und parallel durch eine Druckluftquelle von einem Luftkompressor versorgt werden, **dadurch gekennzeichnet, dass** jede motorisch betriebene Rolle (11) ein Rohr besitzt, das mit zwei Kammern (C1 - C2) angeordnet ist, eine vor der Entspannung bzw. Druckentlastung, und eine nach der Kühlung (C2), in der sich die Motoreinheit befindet.

2. Anlage nach Anspruch 1, **dadurch gekennzeichnet, dass** jede motorisch betriebene Rolle (11) ein Rohr (13) besitzt, das an seinen gegenüberliegenden Enden Lager (14 - 15) aufnimmt, die an Drehachsen (16 - 17) montiert sind, welche an der Konstruktion positioniert sind, die den Rahmen (18) des Transportbandes bildet, wobei die Getriebemotoreinheit (4 - 5) in dem Rohr angeordnet ist und auf einem der Lager (14) und auf einer Kupplung (20) aufliegt, die im Inneren des Rohres montiert und in einen Zwischenabschnitt eingeschoben ist, und zwei Kammern (C1 - C2) definiert, eine vor der Entspannung bzw. Druckentlastung, und eine nach der Kühlung (C2), in der sich die Getriebemotoreinheit befindet, und dass die motorisch betriebene Rolle in ihrer Konstruktion mit Leitungsrohren angeordnet ist, die die Zirkulation der komprimierten Flüssigkeit über ein Anschlussstück (21) für die Flüssigkeit ermöglichen, das über eine feststehende Achse (16) der Rolle angeordnet ist.

3. Anlage nach Anspruch 2, **dadurch gekennzeichnet, dass** die Lager (14 - 15) an feststehenden Achsen (16 - 17) montiert sind, welche innen hohl sind und eine Bohrung oder mehrere Bohrungen (16a - 17a) besitzen, wobei die erste (16a) den Eintritt bildet, über den das Anschlussstück für die Flüssigkeit (21) angeschlossen ist, und die andere Bohrung (17a) den Durchgang elektrischer Verkabelungselemente (19) sicherstellt, und dass das Lager (15) mit hindurchgehenden Leitungsrohren versehen ist, die Lüftungslöcher bilden, und dass die Kupplung (20) in ihrer querverlaufenden Tiefe ein Leitungsrohr oder mehrere Leitungsrohre (20a) für den Durchfluss der Flüssigkeit besitzt.
